(19) Europäisches Patentamt / European Patent Office / Office européen des brevets

(11) **EP 1 993 887 B1**

(12) **FASCICULE DE BREVET EUROPEEN**

(45) Date de publication et mention
de la délivrance du brevet:
**09.12.2015 Bulletin 2015/50**

(51) Int Cl.:
***B60T 8/17*** *(2006.01)*     ***B60T 8/32*** *(2006.01)*
***B64C 25/42*** *(2006.01)*

(21) Numéro de dépôt: **07731132.2**

(22) Date de dépôt: **13.03.2007**

(86) Numéro de dépôt international:
**PCT/FR2007/000436**

(87) Numéro de publication internationale:
**WO 2007/104861 (20.09.2007 Gazette 2007/38)**

(54) **PROCEDE DE REPARTITION DU FREINAGE DANS AU MOINS UN GROUPE DE FREINS D'UN AERONEF**

VERFAHREN ZUR BREMSKRAFTVERTEILUNG IN MINDESTENS EINER BREMSGRUPPE EINES FLUGZEUGES

METHOD FOR BRAKE PROPORTIONING IN AT LEAST ONE BRAKE GROUP OF AN AIRCRAFT

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité:  **13.03.2006   FR 0602181**

(43) Date de publication de la demande:
**26.11.2008   Bulletin 2008/48**

(73) Titulaire: **Messier-Bugatti-Dowty
78140 Vélizy-Villacoublay (FR)**

(72) Inventeurs:
• **DELLAC, Stéphane
F-31170 Tournefeuille (FR)**
• **JACQUET, Arnaud
F-92140 Clamart (FR)**

• **GISSINGER, Gérard Léon
F-68210 Balschwiller (FR)**
• **BASSET, Michel
F-68990 Heimsbrunn (FR)**
• **CHAMAILLARD, Yann
F-45130 Le Bardon (FR)**
• **GARCIA, Jean-Pierre
F-31170 Colomiers (FR)**

(74) Mandataire: **Parzy, Benjamin Alain et al
Cabinet Boettcher
16, rue Médéric
75017 Paris (FR)**

(56) Documents cités:
**EP-A- 1 588 912      EP-A2- 0 443 213
WO-A1-02/12043      GB-A- 1 585 321**

**Description**

L'invention concerne un procédé de répartition de freinage dans au moins un groupe de freins d'un aéronef.

ARRIERE-PLAN DE L'INVENTION

Les aéronefs d'une certaine importance sont généralement équipés d'un calculateur de freinage qui, pour assurer une décélération donnée, génère un objectif d'effort de freinage en réponse soit d'un appui par le pilote sur les pédales de freins, soit en réponse à une sélection par le pilote d'un niveau de décélération déterminé (fonction "autobrake"). Cet objectif d'effort de freinage est en pratique réalisé en envoyant des consignes de freinage aux organes de distribution de puissance associés aux freins, identiques pour tous les freins et qui sont telles que la somme des efforts de freinage développés par les freins en réponse à ces consignes de freinage réalise l'objectif d'effort de freinage. L'application de cet effort global de freinage est maintenue suffisamment longtemps par le calculateur de freinage pour dissiper par frottement dans les freins l'énergie nécessaire à la décélération requise de l'aéronef.

Lors des phases de manoeuvre au sol, c'est-à-dire de déplacement de l'aéronef à vitesse réduite sur la plateforme aéroportuaire, on connaît des procédés de répartition de freinage selon lesquels on ne freine qu'avec une fraction seulement des freins. Puis, au coup de frein suivant, on freine avec la fraction complémentaire des freins. Ce procédé a pour but de diminuer globalement l'usure des éléments de friction des freins.

Cependant, ce type de répartition présente quelques inconvénients. Le découpage de l'ensemble des freins en deux fractions complémentaires des freins est fixée a priori, et, en général, chaque fraction regroupe une moitié des freins choisis de sorte que le freinage avec des avec des efforts de freinage identiques pour chaque frein actif donne un freinage symétrique. Ainsi, si globalement, les freins s'usent moins, il se peut que les éléments de friction de l'un des freins chauffent plus vite que ces voisins et atteignent quand même une plage de température dans laquelle l'usure des éléments de friction est accélérée.

On connaît par ailleurs les protections anti-glissement consistant à réduire momentanément l'effort de freinage sur un frein si la roue correspondante se met à glisser. Ces corrections affectent l'une ou l'autre des roues, sans pour autant qu'une stratégie de répartition globale ne soit mise en oeuvre. Momentanément, l'effort de freinage total peut être inférieur à l'objectif de freinage.

On connaît également du document GB 1 585 321 une méthode pour égaliser l'énergie dissipée entre deux freins en calculant pour chaque frein un taux d'énergie dissipée en effectuant le produit du couple généré par le frein par le critère de rotation de la roue, puis en intègrent ce taux. Cette méthode se contente de répartir a posteriori les efforts de freinage entre les deux freins, en se basant sur l'énergie déjà dissipée par ces freins.

OBJET DE L'INVENTION

L'invention a pour objet un procédé de répartition permettant d'optimiser l'utilisation des freins.

BREVE DESCRIPTION DE L'INVENTION

En vue de la réalisation de ce but, on propose un procédé de gestion du freinage d'un aéronef comportant une pluralité de groupes de freins, chaque frein comportant des éléments de friction, comportant les étapes de, pour chacun des groupes de freins :

- estimer un niveau d'énergie à dissiper par les freins de ce groupe;
- déterminer des consignes unitaires de freinage pour chacun des freins de ce groupe de sorte que les consignes unitaires de freinage permettent d'assurer, au moins dans des conditions normales de fonctionnement des freins, un freinage qui dissipe ledit niveau d'énergie, les consignes unitaires de freinage étant déterminées pour satisfaire également à au moins un autre objectif opérationnel donné.

Ainsi, en prévoyant à l'avance le niveau d'énergie à dissiper par le groupe de freins avant d'effectuer le freinage, il devient possible, tout en dissipant le niveau d'énergie requis pour le groupe, de satisfaire un autre critère opérationnel prenant en compte le niveau d'énergie à dissiper.

Par exemple, si dans le groupe, l'un des freins chauffe trop, il est possible d'augmenter l'effort de freinage des autres freins du groupe de façon à ménager le frein trop chaud.

Une telle répartition du freinage entre les freins du groupe n'est pas fixée a priori mais peut varier à chaque application de freinage pour satisfaire le critère opérationnel retenu. Ainsi, contrairement aux répartitions connues, il n'est pas possible de prévoir à l'avance la répartition de l'effort de freinage.

De préférence, l'autre objectif opérationnel comprend une préservation d'éléments de l'aéronef sollicités lors d'un freinage par les freins du groupe.

On cherche alors à répartir les freinages de façon à préserver les éléments sollicités, afin par exemple d'en augmenter leur durée de vie.

Selon divers modes particuliers de mise en oeuvre, l'autre objectif opérationnel comprend

- une minimisation d'une usure des éléments de friction des freins du groupe.
- une minimisation d'une usure de pneumatiques associés aux freins du groupe.

Pour un aéronef équipé de freins électromécaniques comportant des actionneurs électromécaniques de freinage, l'autre objectif opérationnel peut comprendre :

- une minimisation du nombre d'actionnements des freins de ce groupe.
- une minimisation d'une amplitude des efforts appliqués par les actionneurs.

BREVE DESCRIPTION DES DESSINS

L'invention sera mieux comprise à la lumière de la description qui suit en référence aux figures des dessins annexés parmi lesquelles :

- la figure 1 est une vue schématique d'un aéronef comportant quatre atterrisseurs principaux à roues freinées ;
- la figure 2 est un schéma-bloc d'une architecture de guidage au sol de l'aéronef de la figure 1 selon un mode particulier de mise en oeuvre de l'invention ;
- la figure 3 est une vue détaillée de la figure 2 illustrant la commande de freinage ;
- la figure 4 est un schéma-bloc d'une répartition à l'intérieur d'un même groupe, adaptable à la commande illustrée à la figure 3.

DESCRIPTION DETAILLEE DE L'INVENTION

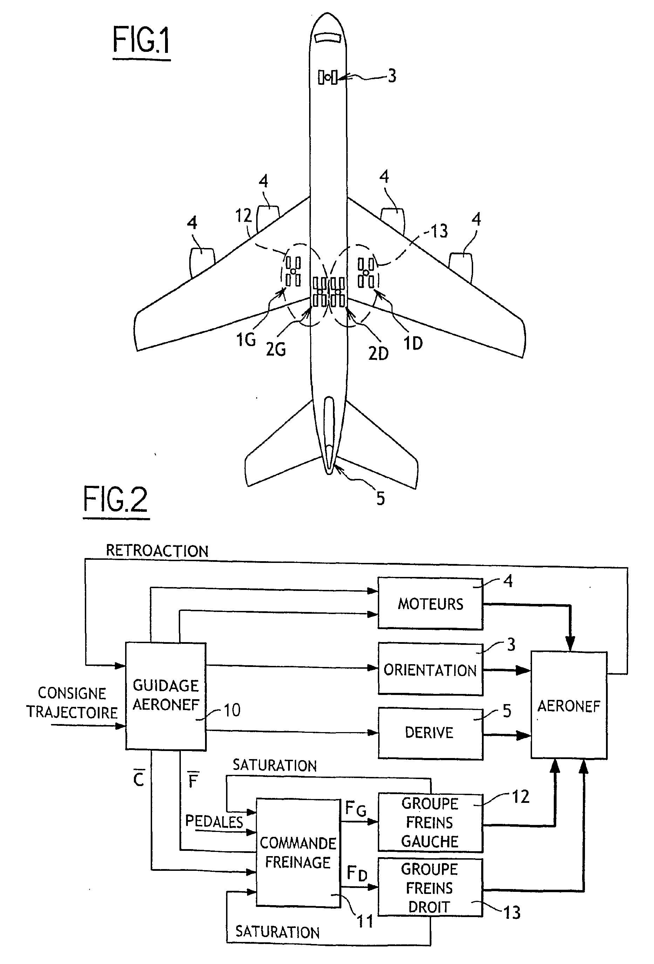

L'invention est ici illustrée en référence à un aéronef tel que celui de la figure 1 comportant deux atterrisseurs principaux de voilure 1G et 1D, deux atterrisseurs principaux de fuselage 2G et 2D, et un atterrisseur auxiliaire 3 à roues orientables. Les atterrisseurs principaux 1G,1D,2G,2D portent chacun quatre roues équipées de freins. L'aéronef est en outre équipé de moteurs 4 et d'une dérive 5.

L'invention s'insère dans une architecture de guidage au sol de l'aéronef illustrée à la figure 2 qui comporte un module de guidage de l'aéronef 10. Le module de guidage 10 reçoit en entrée une consigne de trajectoire (qui peut, le cas échéant être rectiligne) et commande tous les organes pouvant influer sur la trajectoire au sol de l'aéronef, c'est-à-dire les moteurs 4, l'orientation des roues de l'atterrisseur auxiliaire 3, la dérive 5, et, bien sûr, les freins des atterrisseurs principaux.

Le module de guidage 10 génère des ordres à destination des moteurs 4, de la dérive 5 et de la commande d'orientation des roues de l'atterrisseur auxiliaire 3, et déduit par différence entre la consigne de trajectoire et les effets attendus des actions menées par les organes précités en réponse auxdits ordres un objectif de freinage $\overline{F}$ et un objectif de couple de lacet $\overline{C}$ à réaliser par les freins.

La consigne de trajectoire peut revêtir diverses formes:

- dans un mode de freinage pur, par exemple suite à un atterrissage, la consigne de trajectoire consistera à spécifier au module de guidage 10 au moins une décélération donnée et une vitesse de virage nulle ;
- dans un mode de manoeuvre au sol, par exemple entre la piste et l'aérogare, la consigne de trajectoire consistera à spécifier au module de guidage 10 au moins une vitesse de virage qui varie à tout instant pour suivre une trajectoire déterminée.

L'objectif de freinage $\overline{F}$ déterminé à partir de la consigne de trajectoire représente une consigne, c'est-à-dire les évolutions dans le temps d'un effort de freinage que les freins devraient développer pour que l'aéronef suive la trajectoire selon un mouvement (position, vitesse, accélération) donné. En pratique, l'objectif d'effort de freinage représente un ou plusieurs coups de freins de durée et d'intensité déterminée. A chaque coup de frein, il est possible d'associer une énergie totale à dissiper par l'ensemble des freins de l'aéronef, obtenue par intégration temporelle de l'objectif d'effort de freinage.

De même, L'objectif de couple de lacet $\overline{C}$ représente une consigne, c'est-à-dire les évolutions dans le temps du couple de lacet que les freins devraient développer pour que l'aéronef suive la trajectoire selon un mouvement (position, vitesse, accélération) donné. Le couple de lacet peut être par exemple nécessaire pour freiner l'aéronef dans un virage.

Les freins sont commandés par un module de commande de freinage 11 qui reçoit du module de guidage 10 l'objectif d'effort de freinage $\overline{F}$ et l'objectif de couple de lacet $\overline{C}$ à réaliser par les freins.

A partir de l'objectif d'effort de freinage $\overline{F}$ et l'objectif de couple de lacet $\overline{C}$, le module de commande de freinage 11 génère deux niveaux de freinage Fg et Fd à destination respectivement :

- d'un groupe de freins gauche 12 regroupant les freins portés par l'atterrisseur principal de voilure gauche 1G et l'atterrisseur principal de fuselage gauche 2G;
- d'un groupe de freins droit 13 regroupant les freins portés par l'atterrisseur principal de voilure droit 1D et l'atterrisseur principal de fuselage droit 2D.

Des pointillés sur la figure 1 illustrent la composition des groupes gauche 12 et droit 13. On constate ici que les groupes gauche 12 et droit 13 sont symétriques.

Selon l'invention, les niveaux de freinage Fg et Fd sont déterminés de sorte que leur somme soit égale à l'objectif de freinage $\overline{F}$ et que leur effet en couple sur l'aéronef soit égal à l'objectif de couple de lacet $\overline{C}$.

En pratique, dans une telle configuration, l'objectif de couple de lacet $\overline{C}$ peut être spécifié par un écart entre l'effort à développer par l'un des groupes et l'effort à développer par l'autre des groupes.

Cependant, la satisfaction de l'objectif de freinage $\overline{F}$ et de l'objectif de freinage $\overline{C}$ suppose que les freins aient la capacité de freinage suffisante pour satisfaire ces deux objectifs à la fois, ce qui est le cas dans des conditions de fonctionnement normales des freins.

Dans certaines circonstances cependant (piste humide, freins défectueux), il se peut que l'un ou plusieurs des freins ne puisse générer qu'un effort limité de freinage, empêchant d'atteindre l'objectif de freinage $\overline{F}$ ou l'objectif de couple de lacet $\overline{C}$. Dans ce cas, un signal de saturation est envoyé par le groupe concerné au module de commande de freinage 11 qui tient compte de cette saturation pour générer des niveaux de freinage Fg,Fd qui permettent de s'approcher au mieux des objectifs $\overline{F},\overline{C}$ requis compte-tenu de la capacité de freinage disponible.

Selon un mode de mise en oeuvre particulier, le module de commande de freinage 11 est programmé pour hiérarchiser les objectifs, et peut par exemple donner la priorité à la réalisation de l'objectif de freinage $\overline{F}$ plutôt que la réalisation de l'objectif de couple de lacet $\overline{C}$. Dans ce cas, le module de commande de freinage 11 génère des niveaux de freinages Fg,Fd qui sont adaptés à répondre à l'objectif de freinage $\overline{F}$, mais dont l'effet sur le couple de lacet se rapproche le plus possible, compte tenu des capacités des freins, de l'objectif de couple $\overline{C}$. De façon plus générale, on recherchera les niveaux de freinage Fg,Fd qui maximisent un taux de satisfaction simultanée des objectifs $\overline{F},\overline{C}$, compte tenu d'éventuelles limitations d'un ou de plusieurs freins.

En variante, une possibilité peut être donnée au pilote de privilégier l'un ou l'autre des objectifs $\overline{F},\overline{C}$.

Lors de l'application du freinage selon les niveaux de freinage Fg,Fd ainsi déterminés, le groupe de freins gauche 12 et le groupe de freins droit 13 ont une action mécanique sur la trajectoire de l'aéronef illustrée par les flèches en traits épais, de même que les moteurs 4, les roues orientables de l'atterrisseur auxiliaire 3 et la dérive 5, l'action de tous ces organes permettant d'influer sur la trajectoire de l'aéronef.

Des mesures de grandeurs significatives de la trajectoire, telles que la vitesse, l'accélération longitudinale ou angulaire, sont alors fournies au module de guidage 10 pour former une boucle de rétroaction.

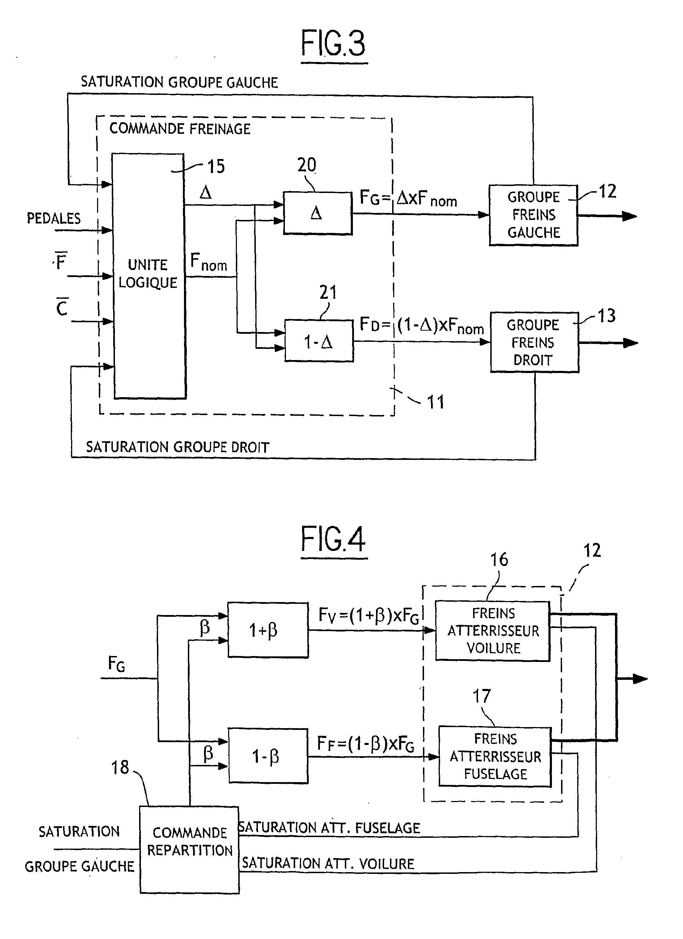

Le module de commande de freinage 11 est maintenant détaillé en relation avec la figure 3.

Le module de commande de freinage 11 comporte tout d'abord une unité logique 15 programmée pour, à partir de l'objectif de freinage $\overline{F}$ et de l'objectif de couple de lacet $\overline{C}$ requis, générer une consigne d'effort nominal Fnom et une consigne de répartition gauche/droite $\Delta$ au moyen desquelles un premier modulateur 20 génère le niveau de freinage Fg pour le groupe de freins gauche 12 et un deuxième modulateur 21 génère le niveau de freinage Fd pour le groupe de freins droit. En pratique, le niveau de freinage Fg est obtenu en effectuant le produit $\Delta$.Fnom, et le niveau de freinage Fd est obtenue en effectuant le produit $(1-\Delta)$.Fnom. L'unité logique 15 est programmée pour, en cas de saturation de l'un ou l'autre des groupes de freins, moduler la consigne d'effort nominal Fnom et la consigne de répartition $\Delta$ pour s'approcher au mieux des objectifs $\overline{F},\overline{C}$, compte tenu de la capacité de freinage disponible.

Ainsi, grâce à la répartition opérée selon l'invention, les freins permettent d'exercer sur l'aéronef un effort de freinage et un couple de lacet. Il est à noter que la répartition ainsi opérée n'est pas figée mais varie au cours du temps.

La connaissance du niveau de freinage d'un groupe permet d'estimer, par intégration temporelle du niveau de freinage, l'énergie à dissiper par les freins de ce groupe.

La logique de groupage des freins selon l'invention peut être poussée à un niveau supérieur en distinguant des sous-groupes dans un groupe. Par exemple dans le groupe gauche, on distingue comme cela est illustré à la figure 4 un premier sous-groupe 16 composé des freins équipant l'atterrisseur principal de voilure gauche 1G, et un deuxième sous-groupe 17 composé des freins équipant l'atterrisseur principal de fuselage gauche 2G.

On subdivise le niveau de freinage Fg en deux sous-niveaux de freinage Fv et Ff à destinations des deux sous-groupes 16,17 au moyen d'un module de commande de répartition 18 qui génère un coefficient de répartition $\beta$ avec

lequel on effectue les produits Fv=(1+β).Fg et Ff=(1-β).Fg. Par construction, la somme des sous-niveaux de freinage Fv et Fb est égale au niveau de freinage Fg. Le module de commande de répartition 18 tient compte des signaux de saturation provenant respectivement des freins du premier sous-groupe 16 et des freins du deuxième sous-groupe 17 pour calculer le coefficient de répartition β. Ainsi, si les freins de l'un des sous-groupes saturent, il est possible de basculer l'effort de freinage sur les freins de l'autre sous-groupe. Si ce basculement ne suffit plus pour atteindre la consigne de freinage gauche Fg, le module de commande de répartition 18 génère un signal de saturation du groupe de freins gauche 12.

Pour réaliser le niveau de freinage visé pour un groupe des freins (ou à un sous-groupe), il convient que tous les freins du groupe génèrent des efforts unitaires de freinage tels que la résultante des efforts unitaires de freinage développé par chacun des freins atteigne le niveau de freinage requis.

Selon une première façon de procéder, on fait en sorte que les efforts unitaires de freinage soient identiques pour tous les freins du groupe. C'est la façon la plus simple de procéder.

Selon un deuxième façon de procéder particulièrement avantageuse, on détermine les différents efforts unitaires de freinage pour satisfaire un critère opérationnel donné, tout en se conformant au niveau de freinage requis, compte tenu bien sûr de la capacité de freinage disponible.

Conformément à un premier mode de mise en oeuvre, le critère opérationnel retenu est la minimisation de l'usure subie par les éléments de friction des freins du groupe. Il est connu que les éléments de friction en carbone ont un taux d'usure qui dépend de la température des éléments de friction. Si $\Delta T_k$ est l'augmentation de la température du frein k lors du freinage à venir, l'usure sur le frein k vaudra

$$U_k = \int_{T_k}^{T_k+\Delta T_k} \tau(T) dT$$

où $\tau$ est le taux d'usure dépendant notamment de la température.

Pour calculer l'augmentation de température $\Delta T_k$ du frein k, on utilise un modèle thermique du frein qui, en fonction d'une énergie $\Delta E_k$ dissipée par le frein, calcule l'augmentation de température $\Delta T_k$. En négligeant le refroidissement naturel du frein (ce qui est valable pour des durées de freinage courtes et des températures de frein faibles), il est possible de relier l'augmentation de température $\Delta T_k$ du frein k à l'énergie à dissiper $\Delta E_k$ par le frein lors du freinage à venir par le modèle suivant:

$$\Delta E_k = \int_{T_k}^{T_k+\Delta T_k} M_k C_p dT_k$$

où $M_k$ est la masse des éléments de friction du frein k, considérée comme constante lors du freinage, et Cp la capacité calorifique du matériau constitutif des éléments de friction du frein k.

L'énergie totale $\Delta E$ à dissiper par les freins du groupe est bien sûr égale à la somme des énergies dissipées par chaque frein. L'énergie totale à dissiper par les freins est donnée par intégration temporelle de l'objectif d'effort de freinage du groupe, comme déjà expliqué.

Ainsi, La minimisation de l'usure revient à rechercher pour chacun des freins du groupe les énergies $\Delta E_k$ à dissiper qui minimisent la quantité :

$$\sum_k \tilde{U}_k$$

sous la contrainte

$$\Delta E = \sum_k \Delta E_k$$

Du calcul des énergies $\Delta E_k$ à dissiper par chacun des freins du groupe, on déduit les consignes unitaires d'effort de freinage Fi à développer par chacun des freins.

La minimisation de l'usure peut être obtenue par toute technique d'optimisation connue. Selon un mode préféré de mise en oeuvre de l'invention, on se donne un certain nombre de répartitions arbitraires de l'énergie entre les freins du groupe. En pratique, chaque répartition est représentée par une liste de coefficients (autant que de freins dans le groupe) dont la somme est égale à 1. Par exemple, si le groupe comporte deux freins, on pourra considérer les répartitions suivantes:

$$R^1 = \{1;0\}, \quad R^2 = \{0,7;0,3\}, \quad R^3 = \{0,5;0,5\},$$

$$R^4 = \{0,3;0,7\} \quad \text{et} \quad R^5 = \{0;1\}.$$

La minimisation consiste à calculer pour chaque répartition arbitraire $R^i$ les énergies correspondantes $\Delta E_k^i$ pour chacun des freins, puis l'usure $U_k^i$ de chacun des freins produite par la dissipation de l'énergie correspondante. L'usure totale

$$U^i = \sum_k U_k^i$$

est la somme des usures ainsi calculées. On retient alors la répartition arbitraire $R^i$ qui donne l'usure totale $U^i$ la plus petite.

La minimisation de l'usure ainsi décrite concerne donc tous les freins d'un même groupe. On peut appliquer ce critère opérationnel pour chacun des groupes de freins, afin d'obtenir une minimisation groupe par groupe de l'usure des éléments de friction. Cependant, ainsi qu'il est bien connu, la minimisation de l'usure groupe par groupe peut conduire à un résultat qui ne soit pas optimal du point de vue de l'ensemble des freins de l'aéronef.

Avantageusement alors, le critère opérationnel de minimisation de l'usure est selon l'invention généralisé pour être appliqué à tous les freins de l'aéronef simultanément, tout en respectant, pour chaque groupe, le niveau d'effort de freinage requis. On recherchera alors la répartition sur l'ensemble des freins qui, tout en respectant pour chaque groupe le niveau d'effort de freinage requis, minimise l'usure globale.

Avantageusement encore, le critère opérationnel de minimisation de l'usure est selon l'invention généralisé non seulement pour tous les freins pour un freinage donné, mais également pour tous les freinages prévisibles le long de la trajectoire. Pour cela, il convient de déterminer à l'avance les freinages prévisibles, et donc l'énergie à dissiper pour chacun des groupes de freins, ce qui impose de connaître l'intégralité du parcours probable de l'aéronef sur l'aéroport.

Cette connaissance peut provenir soit de la mise en mémoire du ou des trajets possibles sur l'aéroport, soit d'une étude statistique portant sur un trajet type pour tel ou tel aéroport et spécifiant le nombre moyen de freinages et l'intensité moyenne de ceux-ci.

Sur le trajet retenu, on détermine un mouvement (position, vitesse, accélération) de l'aéronef le long de ce trajet et on en déduit les objectifs de freinage, de couple de lacet et d'énergie à dissiper par les freins.

L'invention n'est pas limitée à ce qui vient d'être décrit, mais bien au contraire englobe toute variante entrant dans le cadre défini par les revendications.

En particulier, la répartition de freinage selon l'invention reste compatible avec la mise en oeuvre d'une protection anti-glissement pour chacune des roues freinées.

Bien que l'on ait indiqué que l'on établit un objectif d'effort de freinage $\overline{F}$ et un objectif de couple de lacet $\overline{C}$, l'invention couvre également la situation où l'on n'établit que l'un des objectifs, par exemple l'objectif d'effort de freinage $\overline{F}$. Dans ce cas, il suffit de fixer arbitrairement l'objectif de couple de lacet $\overline{C}$ à zéro.

Bien que l'on ait indiqué que le critère opérationnel retenu pour l'application du freinage soit la minimisation de l'usure des éléments de friction, d'autres critères opérationnels pourront être retenus. Par exemple, on peut choisir comme critère opérationnel la recherche de la répartition qui conduit à une application d'effort de freinage la plus progressive possible afin d'améliorer le confort des passagers ou afin de préserver les éléments opérationnels de l'aéronef qui subissent directement l'effort de freinage (les atterrisseurs, les attaches de l'atterrisseur sur l'aéronef, les pneumatiques associés ...). On peut également chercher, pour des freins, à minimiser le nombre d'actionnements à effectuer par les freins afin d'augmenter la durée de vie de ces derniers, ou encore minimiser l'amplitude des efforts à appliquer.

Enfin, bien que l'on ait réparti ici les freins en un groupe gauche et un groupe droit, cette répartition n'est pas limitative, et on pourra répartir les freins autrement, par exemple :

- un groupe gauche composé des freins de l'atterrisseur de voilure gauche,
- un groupe droit composé des freins de l'atterrisseur de voilure droit,
- et un groupe central composé des freins des atterrisseurs de fuselage;

La répartition des freins en groupes n'est pas forcément fixée une fois pour toutes mais peut, dans le cadre de l'invention, varier.

Il va de soi que l'invention ne s'applique pas uniquement à la configuration particulière illustrée ici comprenant deux atterrisseurs principaux de voilure et deux atterrisseurs principaux de fuselage, mais à toute configuration des atterrisseurs portant des freins.

Il va de soi également que l'invention s'applique indifféremment à des freins hydrauliques, électromécaniques ou de toute autre technologie.

## Revendications

1. Procédé de gestion du freinage d'un aéronef comportant une pluralité de groupes de freins, chaque frein comportant des éléments de friction, le procédé comportant les étapes de, pour chacun des groupes de freins (12,13):

   • estimer un niveau d'énergie ($\Delta E$) à dissiper par les freins de ce groupe lors d'un freinage à venir;
   • estimer des consignes unitaires de freinage (Fi) pour chacun des freins de ce groupe de sorte que les consignes unitaires de freinage permettent d'assurer, au moins dans des conditions normales de fonctionnement des freins, un freinage qui dissipe ledit niveau d'énergie, les consignes unitaires de freinage étant déterminées pour satisfaire également à au moins un autre objectif opérationnel donné.

2. Procédé selon la revendication 1, dans lequel l'autre objectif opérationnel comprend une préservation d'éléments de l'aéronef sollicités lors d'un freinage par les freins du groupe.

3. Procédé selon la revendication 2, dans lequel l'autre objectif opérationnel comprend une minimisation d'une usure (U) des éléments de friction des freins du groupe.

4. Procédé selon la revendication 2, appliqué à un aéronef équipé de freins électromécaniques comportant des actionneurs électromécaniques de freinage, dans lequel l'autre objectif opérationnel comprend une minimisation du nombre d'actionnements des freins de ce groupe.

## Patentansprüche

1. Verfahren zur Steuerung der Bremsung eines Flugzeugs, das eine Vielzahl von Gruppen von Bremsen umfasst, wobei jede Bremse Reibelemente umfasst, wobei das Verfahren für jede der Gruppen von Bremsen (12, 13) die Schritte umfasst:

   • Berechnen eines Energieniveaus ($\Delta E$) der von den Bremsen dieser Gruppe bei einer künftigen Bremsung abzuleitenden Energie,
   • Berechnen der Einzelbremssollwerte (Fi) für jede der Bremsen dieser Gruppe derart, dass die Einzelbremssollwerte zumindest unter normalen Betriebsbedingungen der Bremsen eine Bremsung gewährleisten können, die das genannte Energieniveau ableitet, wobei die Einzelbremssollwerte so bestimmt werden, dass sie ferner mindestens eine weitere gegebene Betriebsvorgabe erfüllen.

2. Verfahren nach Anspruch 1, wobei die weitere Betriebsvorgabe einen Schutz von Elementen des Flugzeugs umfasst, die bei einer Bremsung durch die Bremsen der Gruppe beansprucht werden.

3. Verfahren nach Anspruch 2, wobei die weitere Betriebsvorgabe eine Minimierung des Verschleißes (U) der Reibelemente der Bremsen der Gruppe umfasst.

4. Verfahren nach Anspruch 2, angewandt bei einem Flugzeug, das mit elektromechanischen Bremsen ausgestattet ist, die elektromechanischem Bremsaktoren umfassen, wobei die weitere Betriebsvorgabe eine Minimierung der Anzahl der Betätigungen der Bremsen dieser Gruppe umfasst.

**Claims**

1. A method of managing the braking of an aircraft having a plurality of groups of brakes, each brake comprising friction elements, the method comprising the following steps for each one of the groups (12, 13) of brakes:

   · estimating an energy level ($\Delta E$) to be dissipated by the brakes of the group during the forthcoming braking; and
   · estimating individual braking setpoints ($F_i$) for each of the brakes of the group so that the individual braking setpoints make it possible, at least under normal operating conditions of the brakes, to implement braking that dissipates said energy level, the individual braking setpoints also being determined so as to satisfy at least one other given operating objective.

2. A method according to claim 1, in which the other operating objective comprises preserving components of the aircraft that are stressed during braking by the brakes of the group.

3. A method according to claim 2, in which the other operating objective comprises minimizing wear (U) of the friction elements of the brakes of the group.

4. A method according to claim 2, applied to an aircraft fitted with electromechanical brakes having electromechanical braking actuators, in which the other operating objective comprises minimizing the number of times the brakes in the group are actuated.

# FIG.1

# FIG.2

RETROACTION

MOTEURS — 4

CONSIGNE TRAJECTOIRE

GUIDAGE AERONEF — 10

ORIENTATION — 3

DERIVE — 5

AERONEF

$\overline{C}$ $\overline{F}$

SATURATION

PEDALES

COMMANDE FREINAGE — 11

$F_G$

$F_D$

GROUPE FREINS GAUCHE — 12

GROUPE FREINS DROIT — 13

SATURATION

## FIG.3

SATURATION GROUPE GAUCHE

COMMANDE FREINAGE

PEDALES

$\overline{F}$

$\overline{C}$

UNITE LOGIQUE

15

$\Delta$

$F_{nom}$

20

$\Delta$

$F_G = \Delta \times F_{nom}$

GROUPE FREINS GAUCHE

12

21

$1-\Delta$

$F_D = (1-\Delta) \times F_{nom}$

GROUPE FREINS DROIT

13

11

SATURATION GROUPE DROIT

## FIG.4

$F_G$

$\beta$

$1+\beta$

$F_V = (1+\beta) \times F_G$

16

FREINS ATTERRISSEUR VOILURE

12

$\beta$

$1-\beta$

$F_F = (1-\beta) \times F_G$

17

FREINS ATTERRISSEUR FUSELAGE

18

SATURATION

GROUPE GAUCHE

COMMANDE REPARTITION

SATURATION ATT. FUSELAGE

SATURATION ATT. VOILURE

**EP 1 993 887 B1**

## RÉFÉRENCES CITÉES DANS LA DESCRIPTION

**Documents brevets cités dans la description**

• GB 1585321 A